# EUROPÄISCHE PATENTSCHRIFT

(11) **EP 2 828 095 B1**
(45) Veröffentlichungstag und Bekanntmachung des Hinweises auf die Patenterteilung: **24.02.2016**
(21) Anmeldenummer: 13711620.8
(22) Anmeldetag: 18.03.2013
(51) Int. Cl.: B42D 15/00

(54) **VERFAHREN ZUR HERSTELLUNG EINES SICHERHEITSVERBUNDKÖRPERS UND SICHERHEITSVERBUNDKÖRPER MIT INNENLIEGENDER BRECHENDER STRUKTUR**
METHOD FOR PRODUCING A SECURITY COMPOSITE BODY, AND SECURITY COMPOSITE BODY HAVING AN INTERNAL REFRACTIVE STRUCTURE
PROCÉDÉ DE FABRICATION D'UN CORPS COMPOSITE DE SÉCURITÉ, ET CORPS COMPOSITE DE SÉCURITÉ COMPORTANT UNE STRUCTURE INTÉRIEURE PROVOQUANT UN EFFET DE RÉFRACTION

(30) Priorität: 19.03.2012 DE 102012204341
(43) Veröffentlichungstag der Anmeldung: 28.01.2015
(73) Patentinhaber: Bundesdruckerei GmbH, 10969 Berlin (DE)
(72) Erfinder: SPRINGMANN, Edward, 10249 Berlin (DE); DR. PFLUGHOEFFT, Malte, 45127 Essen (DE)
(74) Vertreter: Patentanwälte Bressel und Partner mbB
(86) Internationale Anmeldenummer: PCT/EP2013/055587
(87) Internationale Veröffentlichungsnummer: WO 2013/139748

(56) Entgegenhaltungen:
- WO-A2-2005/058610
- WO-A2-2011/051670

## Beschreibung

Die Erfindung betrifft ein Verfahren zur Herstellung eines Sicherheitsverbundkörpers sowie einen Sicherheitsverbundkörper.

Als Sicherheitsverbundkörper wird hier ein aus mehreren Materialien hergestellter Verbundkörper betrachtet, der mindestens ein eine Fälschung, Nachahmung, Duplizierung oder Ähnliches erschwerendes oder sogar unmöglich machendes Merkmal umfasst. Sicherheitsverbundkörper werden beispielsweise zur Herstellung von Sicherheits- und/oder Wertdokumenten oder unmittelbar als Sicherheits- oder Wertdokumente verwendet. Moderne Pass- oder Personaldokumente umfassen beispielsweise häufig einen Dokumentkörper, welcher auf Kunststoffbasis hergestellt ist. Ein solcher Dokumentkörper wird in der Regel aus mehreren Schichten, beispielsweise Folien, desselben oder unterschiedlicher Kunststoffmaterialien hergestellt. Ein solcher Dokumentkörper ist häufig ein Sicherheitsverbundkörper.

Zur Absicherung gegen Verfälschungen, unautorisierte Nachbildungen, Duplizierungen und Ähnliches weisen Sicherheitsverbundkörper oder Sicherheitsdokumente so genannte Sicherheitsmerkmale auf. Eine Klasse von Sicherheitsmerkmalen zeigt einen betrachtungswinkelabhängigen optischen Effekt. Solche betrachtungswinkelabhängigen Effekte können beispielsweise durch beugende Strukturen wie Hologramme oder brechende Strukturen erzeugt werden.

Eine Untergruppe der einen winkelabhängigen optischen Effekt aufweisenden Sicherheitsmerkmale umfasst eine lichtbrechende Struktur, beispielsweise in Form einer Lenticularlinse, welche eine Vielzahl von Linsenelementen in einem Linsenarray umfasst, und beabstandet hierzu eine in dem Dokumentkörper gespeicherte, optisch erfassbare Information.

Aus der WO 03/022598 A1 ist ein Aufzeichnungsträger bekannt, der eine obere Schicht aufweist, die auf ihrer Außenseite eine Mehrzahl von Lenticularlinsen und rückseitig ein Darstellungselement besitzt, das beim Kippen des Aufzeichnungsträgers um wenigstens eine Achse beweglich erscheint. Die Lenticularlinsen erstrecken sich lediglich über einen Teilbereich der gesamten Außenseite. Das Darstellungselement ist ein Sicherheitselement, das auf einer inneren Kartenschicht aufgedruckt ist. Nicht angegeben ist, wie die Lenticularlinsen in den Dokumentkörper eingebracht werden.

Aus der WO 2005/058610 A2 ist ein Datenträger bekannt, in den durch einen Laserstrahl Kennzeichnungen in Form von Mustern, Buchstaben, Zahlen und/oder Bildern eingebracht sind, die aufgrund von durch den Laserstrahl bewirkten, aus Materialumwandlungen resultierenden lokalen Änderungen der optischen Eigenschaften des Datenträgers sichtbar sind. Der Datenträger umfasst eine im sichtbaren Spektralbereich transparente, lasersensitive Aufzeichnungsschicht, die mit einem Oberflächenrelief in Form eines Linsenrasters versehen ist. Die Kennzeichnungen sind mit dem Laserstrahl aus unterschiedlichen Richtungen durch das Linsenraster hindurch in die Aufzeichnungsschicht eingebracht und bei der späteren Betrachtung aus denselben Richtungen erkennbar. Der Datenträger ist zumindest im Bereich der eingebrachten Kennzeichnungen transparent.

Aus der WO 2011/051670 A2 ist eine Sicherheitsvorrichtung mit einer linsenartigen Vorrichtung bekannt, die eine Anordnung von linsenförmigen fokussierenden Elementen umfasst, die über einer Anordnung aus Sätzen von Bildstreifen gebildet ist, sodass unter verschiedenen Betrachtungsrichtungen jeweils ein korrespondierender Bildstreifen eines jeden Satzes über ein entsprechendes linsenförmiges fokussierendes Element zu sehen ist, wobei die Bildstreifen zumindest teilweise als Reliefstruktur ausgebildet sind.

Aus der DE 10 2008 008 044 A1 ist ein kostengünstiges Verfahren zur Herstellung von Sicherheits- und/oder Wertdokumenten bekannt, die geeignet sind, flexible und fälschungssichere Strukturen mit geringer thermischer Belastung herzustellen, wobei die Oberflächenstruktur in die Oberseite und/oder die Unterseite von zur Herstellung von Dokumenten verwendeten Substraten mit einer Prägeeinrichtung, die mindestens ein Prägewerkzeug mit jeweils einer Kontaktfläche aufweist, unter Anwendung eines Prägedrucks und unter Anwendung von Ultraschall eingeprägt wird, wobei die Kontaktfläche genauso groß ist wie oder größer ist als die Oberseite oder die Unterseite des Substrats. Es sind Ausführungsformen des Herstellungsverfahrens beschrieben, die Mikrolinsen in einen Dokumentkörper einprägen.

Aus der DE 102008031 653 A1 sind ein Verfahren und eine Vorrichtung zum Einbringen eines Sicherheitsmerkmals in ein Wert- oder Sicherheitsdokument bekannt, wobei das Wert- oder Sicherheitsdokument einen Dokumentenkörper mit mindestens einer thermoplastischen Oberflächenschicht umfasst, wobei das Verfahren die Schritte aufweist: Bereitstellen des Dokumentenkörpers; Bereitstellen und/oder Erstellen einer strukturierten Sonotrode, die mit einer Schallquelle gekoppelt ist oder wird; Anordnen des Dokumentkörpers relativ zu der Sonotrode; Inkontaktbringen der Sonotrode und der Oberflächenschicht des Dokumentkörpers und zeitgleiches Einkoppeln von Schallwellen über die Sonotrode in das Wert- oder Sicherheitsdokument, so dass sich eine Reliefstruktur in der Oberflächenschicht ausbildet, wobei die Sonotrode mit einer Strukturierung bereitgestellt wird und/oder hergestellt wird, die eine Solleindringebene aufweist und die Sonotrode so strukturiert ist, dass aus der Solleindringebene vorspringende Bereiche und in die Solleindringebene hineinragende vertiefte Bereiche existieren, wobei die Sonotrode während der Schalleinkopplung unter Anwendung von Druck in den Dokumentkörper bewegt wird, bis die Solleindringebene mit einem Dokumentkörperoberflächensollniveau übereinstimmt und die vorspringenden Bereiche vertiefte Reliefstrukturen und die vertieften Bereiche hervorspringende Reliefstrukturen in der Oberflächenschicht erzeugen.

Aus der EP 0216947 A1 ist ein kartenförmiger Datenträger mit einem Substrat und mindestens einer transparenten Deckfolie bekannt. Das Substrat wird unter Anwendung eines Laserstrahls mit durch die Deckfolie hindurch erkennbaren Informationen versehen, wobei die transparente Deckfolie ein den Informationsbereich zumindest teilweise überlappendes vor dem Aufzeichnen der Information aufgebrachtes Relief trägt, welches durch seine optische Linsenwirkung die Informationsaufzeichnung charakteristisch verändert. In Abhängigkeit von der Einstrahlrichtung des Laserlichts wird die Information an unterschiedlichen Orten in dem Substrat gespeichert. Ebenso werden bei einer Sichtprüfung unterschiedliche Informationen in Abhängigkeit von einem Betrachtungswinkel wahrgenommen.

Aus der EP 0 219 012 B1 ist ein Datenträger bekannt, bei dem in einem inneren Volumenbereich Informationen mittels eines Laserstrahls eingebracht sind, die in Form von Änderungen der optischen Eigenschaften aufgrund einer irreversiblen, durch den Laserstrahl bewirkten Materialänderung sichtbar sind. Beschrieben sind beispielsweise kartenförmige Datenträger, die ein Linsenraster an einer Oberfläche aufweisen. Das Linsenraster kann bei einem Kaschiervorgang eingeprägt werden, indem in eine entsprechende Kaschierplatte ein Negativ des Linsenrasters eingearbeitet wird. Ebenso kann eine thermostabile Prägematrize verwendet werden, die zwischen der transparenten Deckschicht und der Kaschierplatte eingelegt wird. Es ist ferner beschrieben, dass die Karte mittels eines Laminierverfahrens hergestellt werden kann und das Linsenraster anschließend mittels eines Prägestempels oder einer Prägerolle eingebracht wird. Ein Einbringen der Information erfolgt über einen Laserstrahl, der unter unterschiedlichen Richtungen Informationen durch das Linsenraster in den Kartenkörper einbringt. So lassen sich auf einfache Weise Kippbilder realisieren.

Bei den aus dem Stand der Technik bekannten Verfahren und hieraus resultierenden Sicherheitsdokumenten, bei denen zunächst eine optische Struktur, vorzugsweise eine optische Struktur in Form eines Linsenrasters, in eine Oberfläche eingebracht wird und anschließend die Information mittels eines Laserstrahls über ein Bewirken irreversibler Materialveränderungen eingebracht wird, sind im Wesentlichen nur Informationen in Form von Grauwerten speicherbar. Darüber hinaus kann ein nachträgliches Zufügen von Informationen durch eine emeute Laserbestrahlung zum Verfälschen des Sicherheitsdokuments genutzt werden. Vollfarbige oder bunte Informationsspeicherungen sind in der Regel nicht möglich. Bei dem aus der WO 03/022598 A1 bekannten Verfahren lässt sich die Information zwar farbig, insbesondere bunt, drucken, jedoch ist eine erreichbare Auflösung für ein betrachtungswinkelabhängiges Sicherheitsmerkmal dadurch begrenzt, dass beim Einfügen und Integrieren der Druckinformation in den Dokumentkörper im Laminationsverfahren auftretende Schrumpfungsprozesse sowie eine exakte Ausrichtung der Druckinformation innerhalb des Dokumentkörpers und insbesondere relativ zu in einem Laminierverfahren zeitgleich eingebrachten Mikrolinsen nur unzureichend gewährleistet ist.

Allgemein besteht das Bedürfnis, immer neuartige Sicherheitsmerkmale zu schaffen, insbesondere solche, welche schwierig herzustellen sind, und somit durch Fälscher nicht oder nur mit einem erheblichen Aufwand nacharbeitbar sind.

Der Erfindung liegt somit die technische Aufgabe zugrunde, ein Verfahren zur Herstellung eines neuartigen Sicherheitsverbundkörpers sowie einen neuartigen Sicherheitsverbundkörper zu schaffen, welcher ein betrachtungswinkelabhängiges Sicherheitsmerkmal umfasst, und schwieriger herzustellen ist als aus dem Stand der Technik bekannte Sicherheitsverbundkörper.

Der Erfindung liegt die Idee zugrunde, einen Verbundkörper herzustellen, welcher aus unterschiedlichen Kunststoffmaterialien erzeugt wird, welche im Volumen transparent sind, und unterschiedliche Brechungsindizes aufweisen.

Ein solcher neuartiger Sicherheitsverbundkörper umfasst an einer Grenzfläche zwischen den beiden Kunststoffmaterialien mit unterschiedlichen Brechungsindizes eine Reliefstruktur. Durch die Grenzfläche hindurchtretendes Licht wird abhängig von einem Auftreffwinkel relativ zu einer lokalen Oberflächennormale an der Grenzfläche aufgrund der unterschiedlichen Brechungsindizes unterschiedlich gebrochen. Bei geeigneter Ausgestaltung der Reliefstruktur, beispielsweise in Form von mehreren Mikrolinsen, kann jeweils eine lokale Fokussierung von ursprünglich parallel einfallenden Lichtstrahlen in einem Gebiet hinter der Grenzfläche erfolgen. Allgemein gilt, dass eine Betrachtung von optisch wahrnehmbaren Information, welche für einen Betrachter hinter der Grenzfläche angeordnet ist, abhängig von der Betrachtungsrichtung unterschiedlich wahrgenommen wird, da eine an der Grenzfläche auftretende Brechung aufgrund der Strukturierung eine Lichtausbreitung gegenüber einer Lichtausbreitung durch eine ebene Grenzfläche verändert.

Während bei den aus dem Stand der Technik bekannten Sicherheitsdokumenten mit einer Mikrolinsenstruktur an der Oberfläche eines Dokuments ein solcher betrachtungswinkelabhängiger Effekt, welcher auch als CLI (Changeable Laser Image) oder MLI (Multiple Laser Image) Effekt bezeichnet wird, ist es bei dem neuartigen Sicherheitsverbundkörper vorgesehen, auf entgegengesetzten Seiten der Reliefstruktur jeweils ein optisch wahrnehmbares Merkmal auszubilden, sodass diese beide registergenau mit der Reliefstruktur in dem Sicherheitsverbundkörper angeordnet sind. Bei einer Betrachtung des einen Merkmals durch die mit der Reliefstruktur versehene Grenzfläche hindurch, beispielsweise über eine Oberseite des Sicherheitsverbundkörpers, zeigt dieses eine Merkmal einen betrachtungswinkelabhängigen Effekt. Betrachtet man nun den Sicherheitsverbundkörper von einer der Oberseite gegenüberliegenden Unterseite, so kann man das andere Merkmal durch die in der Grenzschicht ausgebildete Reliefstruktur hindurch betrachten und einen betrachtungswinkelabhängigen optischen Effekt in Bezug auf das andere ausgebildete Merkmal im Zusammenhang mit der Reliefstruktur beobachten. Es wird somit ein neuartiges Sicherheitsmerkmal geschaffen, bei dem auf gegenüberliegenden Seiten einer im Innern des Verbundsicherheitskörpers angeordneten lichtbrechenden Struktur, vorzugsweise in Form eines Linsenarrays, optisch wahrnehmbare Merkmale angeordnet sind.

Insbesondere wird ein Verfahren zur Herstellung eines Sicherheitsverbundkörpers geschaffen, welches die Schritte umfasst: Bereitstellen einer transparenten Schicht aus einem ersten Kunststoffmaterial mit einem ersten Brechungsindex n₁, wobei die transparente Schicht eine Oberseite und einer gegenüberliegende Unterseite aufweist; Einprägen einer Reliefstruktur in die Oberseite der transparenten Schicht; Überdecken zumindest der Reliefstruktur mit einem zweiten Kunststoffmaterial, welches einen von dem ersten Brechungsindex abweichenden zweiten Brechungsindex n₂ aufweist; Zusammenfügen des mindestens einen zweiten Kunststoffmaterials und gegebenenfalls weiterer zumindest teilweise transparenter Schichten mit der einen transparenten Schicht zu dem Verbundkörper, so dass eine Unterseite der transparenten Schicht einer Unterseite des Verbundkörpers zugewandt ist und eine Oberseite der transparenten Schicht der Oberseite des Verbundkörpers zugewandt ist (und das zweite Kunststoffmaterial eine an die Reliefstruktur angepasste und unmittelbar anliegende Gegenstruktur ausbildet); und Einbringen von zwei Merkmalen in den Verbundkörper, wobei die zwei Merkmale registergenau mit der Reliefstruktur auf entgegengesetzten Seiten der Reliefstruktur in dem Verbundkörper eingebracht werden, so dass bei einer Betrachtung des Verbundköpers über die Vorderseite eine betrachtungswinkelabhängiger Effekt des einen Merkmals und bei einer Betrachtung des Verbundkörpers über dessen Rückseite ein betrachtungswinkelabhängiger Effekt des anderen Merkmals wahrnehmbar ist. Auch wenn die Merkmale selber gegebenenfalls einen eigenständigen betrachtungswinkelabhängigen Effekt aufweisen, so wird dieser zumindest durch die registergenaue hiermit ausgebildete Reliefstruktur überlagert, sodass die Effekte, welche der Betrachter des Sicherheitsverbundkörpers wahrnimmt, jeweils durch die Lichtbrechung an der Reliefstruktur zumindest mitbedingt sind.

Ferner wird ein Sicherheitsverbundkörper vorgeschlagen, welcher umfasst: eine erste transparente Materialschicht aus einem ersten Kunststoffmaterial mit einem ersten Brechungsindex n₁, welche eine im Innern des Verbundkörpers befindliche Oberseite aufweist, in der eine Reliefstruktur ausgebildet ist, und eine an die Reliefstruktur angepasste, an die Reliefstruktur unmittelbar angrenzende Gegenstruktur aus einem zweiten Kunststoffmaterial, welches einen von dem ersten Brechungsindex n₁ abweichenden zweiten Brechungsindex n₂ aufweist, und zwei Merkmale, wobei die zwei Merkmale registergenau mit der Reliefstruktur auf entgegengesetzten Seiten der Reliefstruktur ausgebildet sind, so dass bei einer Betrachtung des Verbundköpers über die Vorderseite eine betrachtungswinkelabhängiger Effekt des einen Merkmals und bei einer Betrachtung des Verbundkörpers über dessen Rückseite ein betrachtungswinkelabhängiger Effekt des anderen Merkmals wahrnehmbar ist. Die "Kontaktfläche" zwischen der Reliefstruktur aus dem ersten Kunststoffmaterial und der Gegenstruktur aus dem zweiten Kunststoffmaterial bildet somit die Grenzfläche aus, welche zwangsläufig ebenfalls die Reliefstruktur abbildet.

### Definitionen

Als Oberflächenrelief wird jede Struktur betrachtet, die von einer planen Ebene abweicht. Eine optische Struktur oder eine optische Oberflächenstruktur ist ein Relief, das elektromagnetische Strahlung, insbesondere sichtbares Licht, bricht und gemäß der geometrischen Optik abbildet. Optische Strukturen bzw. optische Oberflächenstrukturen umfassen insbesondere Mikrolinsen, Fresnellinsen und Lenticularlinsen. Mikrolinsen oder Lenticularlinsen sind Linsen, deren Krümmungsradien im Mikrometerbereich liegen (1 µm bis 1 mm). Die Krümmungsform kann sphärisch, asphärisch oder eine Freiform sein. Ein Linsenarray ist eine regelmäßige rasterartige Anordnung von Linsen. Mikrolinsen können auch in einem 2D-Raster ausgebildet sein und/oder jeweils eine rotationssymmetrische Gestalt aufweisen.

Unter Druckinformation werden Informationen verstanden, welche mittels einer Drucktechnik eingebracht sind oder werden. Übliche Drucktechniken sind Hochdruck, insbesondere in der Ausprägung Letterset, Flachdruck, insbesondere in der Ausprägung Offset, Tiefdruck, insbesondere in den Ausprägungen Stichtiefdruck und Rastertiefdruck, Durchdruck, insbesondere in der Ausprägung Siebdruck, sowie Digitaldruck, insbesondere in den Ausprägungen Inkjet-Druck, Thermotransfer-Druck, Dye-Diffusion-Thermotransfer-(D2T2)-Druck, Retransfer-Druck, und Thermosublimation-Druck.

Eine optisch erfassbare Information ist jede Information, die durch eine Oberfläche eines Dokumentkörpers grafisch mit einem optischen Sensor erfassbar ist.

Hierbei kann eine Erfassung im sichtbaren Wellenlängenbereich, im UV- oder IR-Wellenlängenbereich erfolgen.

Die erfasste Information ist die grafisch erfasste Information. Diese kann hinsichtlich eines erfassten Gehalts hinter einem erfassbaren Gesamtgehalts der erfassbaren Information zurückbleiben. Dies gilt beispielsweise dann, wenn ein Informationsgehalt mit lumineszierenden Farbmitteln eingebracht ist, die im sichtbaren Wellenlängenbereich nicht erfassbar sind, ohne dass eine Anregung der Lumineszenz erfolgt. Die erfasste Information wird diesen Informationsgehalt grafisch nicht umfassen, sofern die optisch erfassbare Information ohne eine Anregung der Lumineszenz erfasst wird.

Farbig ist eine erfassbare Information, wenn sie bei einem menschlichen Betrachte einen Farbeindruck beim Betrachten hervorruft, wobei Grautöne, Weiß und Schwarz nicht als farbig angesehen werden. Auch lumineszierende Farbmittel, die nur bei entsprechender Anregung einen Farbeindruck hervorrufen, werden als farbig angesehen.

Als Farbe wird ein Farbeindruck bei einer Wahrnehmung angesehen. Auch Grautöne, Weiß und Schwarz stellen in diesem Sinn eine Farbe dar.

Bunt ist eine Information, wenn diese mehrere farbige Farben umfasst. Eine bunte Information ist somit nicht monochrom.

Eine optisch erfassbare Information "im Innern eines Dokumentkörpers integrieren" bedeutet, dass die Information so in den Dokumentkörper eingebracht wird, dass diese im fertigen Dokumentkörper einen Abstand zu den Oberflächen des Dokumentkörpers aufweist.

### Bevorzugte Ausführungsformen

Bei einer bevorzugten Ausführungsform des Verfahrens erfolgt das Einbringen der Reliefstruktur mittels eines Ultraschallprägeverfahrens, bei dem in eine strukturierte Sonotrode Ultraschall angekoppelt wird und diese unter Aufwenden eines Drucks mit der Oberseite der transparenten Schicht in Kontakt gebracht wird. Ein Vorteil der Verwendung eines Ultraschallprägeverfahrens liegt darin, dass die Ausbildung der Reliefstruktur in der transparenten Schicht in der Weise erfolgen kann, dass nur eine minimal benötigte Energiemenge in das transparente Kunststoffmaterial eingebracht werden muss. Handelt es sich um ein thermoplastisches Kunststoffmaterial, so wird dieses nur lokal erwärmt und schmilzt nicht im gesamten Volumen auf. Insbesondere wenn die Reliefstruktur bezogen auf die Fläche des herzustellenden Sicherheitsverbundkörpers nur in einem kleinen Teilbereich ausgebildet werden soll, ist dies von enormem Vorteil. Eine Oberflächenstruktur der beispielsweise als Folie bereitgestellten transparenten Schicht, welche beispielsweise optimal für eine nachfolgende Lamination und/oder ein Bedrucken vorbereitet ist, wird somit in jenen Bereichen, in denen die Reliefstruktur nicht ausgebildet wird, nicht oder nur minimal verändert.

Bei anderen Ausführungsformen kann die Reliefstruktur jedoch auch durch ein Heißprägen eines Prägeblechs oder über eine Strukturierung mittels Laserstrahlung, insbesondere mittels einer Laserablation, vorgenommen werden. Eine Laserablation wird vorzugsweise mittels eines intensiven gepulsten Lasers vorgenommen, welcher schrittweise gezielt Material von der Oberfläche der transparenten Substratschicht ablatiert.

Vorzugsweise wird das Relief so strukturiert, dass dieses ein Linsenarray ausbildet. Beispielsweise kann das Relief so strukturiert sein, dass dieses eine Vielzahl von Zylinderlinsenelementen umfasst, die parallel zueinander ausgerichtet sind. Hierbei können die einzelnen Zylinderlinsenelemente identisch oder unterschiedlich hinsichtlich des Krümmungsradius und des Abstands zueinander ausgebildet sein. Beispielsweise können zwei verschiedene Typen von Zylinderlinsen alternierend in einem Muster angeordnet sein.

Andere Ausführungsformen umfassen rotationssymmetrische Linsen, welche ein zweidimensionales regelmäßiges Raster ausbilden.

Die beiden Merkmale, welche auf gegenüberliegenden Seiten des Reliefs registergenau mit diesem in den Sicherheitsverbundkörper eingebracht werden, werden bei einer Ausführungsform unter Verwendung der gebildeten Reliefstruktur mittels eines Lasermarkierverfahrens nach dem Zusammenfügen unter Ausnutzung der im Innern des Verbundkörpers mittels des Reliefs ausgebildeten Linsenstrukturen eingebracht. Hierdurch ist eine registergenaue Einbringung zuverlässig gewährleistet. Die unterschiedlichen Merkmale können so aneinander angepasst sein, dass die eingebrachten Markierungen eine Betrachtung des anderen Merkmals nicht behindern. Hierbei ist zu beachten, dass in der Regel die für einen betrachtungswinkeläbhängigen Effekt eingebrachten Informationen des einen Merkmals, welches beispielsweise durch die Oberseite des Sicherheitsverbundkörpers hinsichtlich der Betrachtungswinkelabhängigkeit verifizierbar ist, bei einer Betrachtung durch die Unterseite vor der im Innern ausgebildeten Reliefstruktur angeordnet sind, sodass diese Markierungen als statische Informationen wahrgenommen werden. Diese müssen jedoch so ausgebildet werden, dass sie eine Durchsicht gestatten und somit eine Betrachtung des anderen Merkmals durch die im Innern ausgebildete Reliefstruktur ermöglichen, um deren winkelabhängigen Betrachtungseffekt bei einer Betrachtung über die Unterseite des Sicherheitsverbundkörpers verifizieren zu können.

Vorzugsweise werden die beiden Merkmale registergenau mit der Reliefstruktur auf gegenüberliegenden Seiten von dieser so eingebracht, dass die optisch wahrnehmbaren Informationen einander flächig überlagern. Dies bedeutet, dass die optisch erfassbaren Informationen des einen Merkmals als statische Information vor den dahinter befindlichen optisch variablen Informationen des anderen Merkmals wahrnehmbar sind.

Bei anderen Ausführungsformen werden die beiden Merkmale registergenau mit derselben Reliefstruktur ausgerichtet eingebracht, jedoch so, dass diese einander bezogen auf die Oberseite (Vorderseite) und Unterseite (Rückseite) des Sicherheitsverbundkörpers einander bei der Betrachtung nicht überlagern. Die statische Information des einen Merkmals wird somit flächig neben der optisch variablen betrachtungswinkelabhängigen Information des anderen Merkmals wahrgenommen.

Alternativ und/oder zusätzlich zu einem Einbringen der Merkmale über eine Lasermarkierung kann eine Information auch drucktechnisch auf eine Substratschicht aufgebracht werden, die zum Erzeugen des Sicherheitsverbundkörpers verwendet wird. In einer ganz einfachen Ausführungsform, welche jedoch hinsichtlich einer Fälschungssicherheit reduziert ist, werden die Informationen der beiden Merkmale auf äußere Oberflächen, d.h. die Oberseite und die Unterseite, des Dokumentkörpers aufgedruckt.

Bei bevorzugteren Ausführungsformen werden die Informationen auf eine Oberfläche vor einem Zusammenfügen zu dem Sicherheitsverbundkörper aufgedruckt. Hierdurch ist eine nachträgliche Verfälschung nicht mehr oder nur erschwert nach einer Delamination möglich.

Somit wird eine Ausführungsform bevorzugt, bei der das mindestens eine Merkmal über ein Aufdrucken von Informationen auf eine Oberfläche einer der zu dem Verbundkörper zusammengefügten Schichten aufgebracht wird. Um eine hohe Beständigkeit des Sicherheitsverbundkörpers gegen ein nachträgliches Auftrennen des Sicherheitsverbundkörpers an jeden Grenzflächen zu vermeiden, welche mit den Grenzflächen der ursprünglich existierenden Schichten oder Kunststoffmaterialien übereinstimmen, aus denen der Sicherheitsverbundkörper ursprünglich zusammengefügt ist, ist es vorteilhaft, wenn alle Schichten oder verwendeten Kunststoffmaterialien auf Basis desselben Polymers hergestellt sind.

Besonders bevorzugt wird eine Ausführungsform, bei der das zweite Kunststoffmaterial auf Basis desselben Polymers wie das erste Kunststoffmaterialhergestellt wird oder ist und in flüssiger Form auf die mit der Reliefstruktur versehene eine transparente Schicht aufgebracht wird, wobei ein Brechungsindex unterschied Δn = |n₁-n₂| zwischen dem Brechungsindex n₁ des ersten Kunststoffmaterial, aus dem die eine transparente Schicht hergestellt ist, und dem Brechungsindex n₂ des zweiten Kunststoffmaterials im fertigen Sicherheitsverbundkörper über unterschiedliche Konzentrationen von nanoskopischen dispergierten Anorganika, insbesondere Übergangsmetallverbindungen, noch bevorzugter Übergangsmetalloxiden, wie TiO₂ oder ZrO₂, verursacht ist.

Dem Fachmann sind Zubereitungen auf Basis eines Polymers in flüssiger Form bekannt. Beispielsweise sind aus der Druckschrift DE 10 2007 052 847 Zubereitungen bekannt, welche auf Polycarbonatbasis hergestellt sind und sich mittels eines Tintenstrahldruckverfahrens verdrucken lassen. Auch aus der EP 0 688 839 A2 sind Polycarbonate auf Basis eines geminal disubstituierten Dihydroxy-Diphenylcycloalkans bekannt. Diese werden dort als Bindemittel von Siebdruckfarben eingesetzt. Der Literaturstelle sind ebenfalls Verfahren zur Herstellung solcher Polycarbonate entnehmbar.

Aus der DE 10 2007 052 948 ist ein Verfahren zur Herstellung eines Verbunds mit zumindest einer ersten Polymerschicht sowie einer zweiten Polymerschicht jeweils aus einem Polycarbonatpolymer auf Basis Bisphenol A bekannt, wobei zwischen den Polymerschichten ein Bauteil angeordnet ist, mit den folgenden Verfahrenstufen: a) das Bauteil wird auf der ersten Polymerschicht angeordnet oder in eine Vertiefung der ersten Polymerschicht eingelegt, b) die erste Polymerschicht wird auf der Seite, auf oder in welche das Bauteil angeordnet ist, zumindest im Bereich des Bauteils mit einer flüssigen Zubereitung, enthaltend ein Lösungsmittel oder ein Lösungsmittelgemisch sowie ein Polycarbonatderivat auf Basis eines geminal disubstituierten Dihydroxydiphenyl-cycloalkans, beschichtet, c) optional erfolgt anschließend an Stufe b) eine Trocknungsverfahrensstufe, d) anschließend an Stufe b) oder Stufe c) wird die zweite Polymerschicht auf die erste Polymerschicht, das Bauteil abdeckend, aufgelegt, e) die erste Polymerschicht und die zweite Polymerschicht werden unter Druck, bei einer Temperatur im Bereich von 120°C bis 180°C und für eine definierte Zeitspanne miteinander laminiert. Dem Fachmann sind somit grundsätzlich Zubereitungen bekannt, welche sich für das Herstellen eines Sicherheitsverbundkörpers auf Kunststoffbasis eignen.

Bei einer bevorzugten Ausführungsform wird das zweite Kunststoffmaterial mittels eines Druckverfahrens aufgebracht, sodass zumindest in dem Gebiet, in dem das Relief ausgebildet ist, mittels des zweiten Kunststoffmaterials eine ebene Fläche auf der von der Reliefstruktur abgewendeten Seite des zweiten Kunststoffmaterials ausgebildet wird.

Ein Drucken kann mit jedem beliebigen Druckverfahren erfolgen. Bevorzugt wird ein Tintenstrahldruckverfahren, bei dem gezielt eine Überdruckung ein und desselben Ortes mehrfach erfolgen kann und somit gezielt ein Auffüllen der in der Reliefstruktur enthaltenen "Freiräume" vorgenommen werden kann, bis eine ebene Überdeckung des Reliefs flächig erreicht ist. Es können jedoch auch andere Druckverfahren eingesetzt werden, um gezielt das zweite Kunststoffmaterial auf die erste transparente Schicht mit der darin ausgebildeten Reliefstruktur aufzubringen.

Bei einer Weiterbildung wird die erste Kunststoffschicht vollflächig mit dem zweiten Kunststoffmaterial überdeckt, sodass sich an der von der Reliefstruktur abgewandten Seite eine ebene Fläche ausbildet. Eine andere Möglichkeit des Auftragens des zweiten Kunststoffmaterials besteht im Rakeln.

Einen besonders stabilen und gegen Angriffsversuche gesicherten Sicherheitsverbundkörper erhält man, wenn die zu dem Verbundkörper zusammengefügten Schichten und das zweite Kunststoffmaterial alle auf Basis desselben thermoplastischen Polymermaterials hergestellt sind oder werden. Diese werden dann in einem Hochdruckhochtemperaturlaminationsverfahren zu einem monolithischen Sicherheitsverbundkörper zusammengefügt. Als monolithisch wird in diesem Zusammenhang ein Sicherheitsverbundkörper angesehen, wenn eine einheitliche durchgehende Materialstruktur in dem Verbundkörper ausgebildet wird. Bei einem solchen Sicherheitsverbundkörper lässt sich kein Phasenübergang hinsichtlich der Polymerstruktur an den ursprünglichen Dichtgrenzen feststellen, aus denen der Sicherheitsverbundkörper hergestellt ist. Als besonders haltbar und widerstandsfähig haben sich Sicherheitsverbundkörper aus Polycarbonat erwiesen.

Um sowohl durch die Oberseite als auch die Unterseite des Sicherheitsverbundkörpers die beiden betrachtungswinkelabhängigen Effekte beobachten zu können, weist der Sicherheitsverbundkörper zumindest im Bereich der Reliefstruktur ein Durchsichtfenster auf. Wird in den Sicherheitsverbundkörper eine Schicht eingearbeitet, welche im Volumen opak ist, so kann ein solches Durchsichtfenster beispielsweise durch eine großflächige Ausstanzung und Einfügung eines transparenten Materials zum Füllen der Ausstanzung hergestellt werden.

Alternativ ist es jedoch auch möglich, eine Vielzahl von Durchbrechungen mit Durchmessern im Mikrometerbereich, vorzugsweise im Bereich zwischen 5 und 200 µm, besonders bevorzugt im Bereich zwischen 10 und 100 µm, einzubringen. Werden solche Durchbrechungen in einem Raster angeordnet, so lässt sich eine Transparenz bis zu etwa 60 % Transmission erreichen. Die einzelnen Durchbrechungen können hierbei durch ein transparentes Kunststoffmaterial, welches beispielsweise ebenfalls durch ein Druckverfahren auf die opake Schicht gezielt im Bereich der Durchbrechungen aufgebracht werden kann, verfüllt werden.

Hierzu kann eine Zubereitung verwendet werden, wie sie oben im Zusammenhang mit dem Stand der Technik erwähnt ist. Bei geeigneter Zusammensetzung führen darüber hinaus Kapillarkräfte dazu, dass die flüssige Zubereitung in die Durchbrechungen eindringt und diese vollständig verfüllt.

Bei anderen Ausführungsformen werden die Durchbrechungen, welche Durchmesser im Mikrometerbereich aufweisen, nicht verfüllt. Es hat sich gezeigt, dass diese bei einem Hochdruckhochtemperaturlaminationsverfahren zumindest nicht durch das opake Wandmaterial der Durchbrechungen verfüllt werden, sodass diese im fertiggestellten Sicherheitsverbundkörper nach wie vor eine Durchsicht gestatten. Dies gilt für typische Schichtstärken im Bereich zwischen 20 µm und etwa 500 µm für geeignet gewählten Durchbrechungsdurchmessern der Perforation.

Man erhält somit in geeigneter Weise einen Sicherheitsverbundkörper, welcher eine Oberseite und eine gegenüberliegende Unterseite aufweist und welcher aus mindestens zwei transparenten Kunststoffmaterialen hergestellt ist, die unterschiedliche Brechungsindizes aufweisen, wobei eine Grenzfläche der beiden Kunststoffmaterialien im Innern des Verbundkörpers zwischen der Oberseite und der Unterseite eine Reliefstruktur aufweist, und zwei Merkmale auf entgegengesetzten Seiten der Grenzschicht registergenau mit der Reliefstruktur ausgebildet sind, sodass das eine der zwei Merkmale einen betrachtungswinkelabhängigen optischen Effekt aufgrund einer Lichtbrechung an der Reliefstruktur bei einer Betrachtung durch die Oberseite liefert und das andere der zwei Merkmale einen betrachtungswinkelabhängigen optischen Effekt aufgrund der Lichtbrechung an der Reliefstruktur bei einer Betrachtung durch die Unterseite liefert.

Neben Ausführungsformen, bei denen eine transparente Schicht, die ursprünglich zwei zueinander im Wesentlichen planparallele ebene Oberflächen aufweist, in die eine Oberfläche eine Reliefstruktur eingeprägt wird, sind auch Ausführungsformen möglich, bei denen sowohl in die Oberseite als auch die Unterseite einer transparenten Schicht registergenau Reliefstrukturen, die aneinander angepasst sind, eingeprägt werden. Bei einer solchen Ausführungsform wird das eine Relief an der Oberseite sowie das andere Relief an der Unterseite jeweils mit einem Kunststoffmaterial überdeckt, welches einen Brechungsindex aufweist, der von dem Brechungsindex des Materials der transparenten Schicht abweicht. Vorzugsweise werden die registergenau zueinander ausgerichteten Reliefstrukturen, d.h. die eine Reliefstruktur und die andere Reliefstruktur, zeitgleich, vorzugsweise mittels eines Ultraschallprägeverfahrens, über zwei strukturierte Sonotroden eingeprägt. Man erhält somit eine Ausführungsform, bei der zusätzlich in die Unterseite der einen transparenten Schicht registergenau mit der Reliefstruktur eine weitere Reliefstruktur ausgebildet wird, die ebenfalls mit dem zweiten Kunststoffmaterial oder einem dritten Kunststoffmaterial, welches einen von dem ersten Kunststoffmaterial abweichenden Brechungsindex n₃ aufweist, überdeckt wird, sodass in dem Verbundkörper durch das zweite Kunststoffmaterial oder das dritte Kunststoffmaterial eine an die weitere Reliefstruktur angepasste weitere Gegenstruktur ausgebildet ist. Werden die Reliefstruktur und die weitere Reliefstruktur beide von dem zweiten Kunststoffmaterial überdeckt, so sind die Oberflächen des zweiten Kunststoffmaterials, die von der Reliefstruktur und der weiteren Reliefstruktur abgewandt sind, vorzugsweise eben und planparallel zueinander ausgebildet. Sofern ein dritter Kunststoff verwendet wird, sind vorzugsweise die von den Reliefstrukturen abgewandten Oberflächen des zweiten Kunststoffmaterials und des dritten Kunststoffmaterials eben und zueinander planparallel ausgebildet.

Es sind ebenso Ausführungsformen denkbar, bei denen in mehrere transparente Folien Reliefstrukturen eingeprägt werden, die jeweils von einem Kunststoffmaterial überdeckt werden, welches einen abweichenden Brechungsindex von dem Material aufweist, aus dem die jeweilige Schicht hergestellt ist, in welche eine solche Reliefstruktur eingeprägt ist. Das Vorsehen mehrerer Reliefstrukturen an unterschiedlichen Oberflächen von Substratschichten, die anschließend zu dem Verbundkörper zusammengefügt werden und dann im Innern des Dokumentkörpers angeordnet sind, besteht darin, dass so optisch brechende Elemente, beispielsweise Linsen, ausbildbar sind, die bei ansonsten gleich bleibenden geometrischen Reliefstrukturen eine höher brechende Optik ermöglichen. Weist z.B. eine transparente Substratschicht, in die auf beiden gegenüberliegenden Seiten jeweils eine Reliefstruktur eingeprägt wird, einen höheren Brechungsindex als die die Reliefstrukturen überdeckenden Kunststoffmaterialien auf, so addiert sich die Brechungswirkung von gleichartigen registergenau ausgerichteten Oberflächenstrukturen. Werden beispielsweise registergenau auf beiden Seiten Zylinderlinsenstrukturen eingeprägt, so können bei Verwendung derselben Kunststoffmaterialien kürzere Brennweiten erzielt werden als bei einer Ausführungsform, bei der nur auf einer Seite der Kunststoffschicht eine Reliefstruktur mit Zylinderlinsenprofilen eingeprägt und mit einem anderen Kunststoff überdeckt wird.

Weitere Vorteile der Erfindung ergeben sich aus der nachfolgenden Figurenbeschreibung. Hierbei zeigen:
- Fig. 1a - 1f: schematische Darstellungen zur Erläuterung der Herstellung eines Sicherheitsverbundkörpers;
- Fg. 2: eine schematische Darstellung einer Vorrichtung zum Herstellen eines Sicherheitsverbundkörpers;
- Fig. 3: eine schematische Schnittdarstellung einer Ausführungsform eines Sicherheitsverbundkörpers;
- Fig. 4: eine weitere Schnittdarstellung eines Sicherheitsverbundkörpers;
- Fig. 5: eine weitere Schnittdarstellung eines Sicherheitsverbundkörpers, bei dem zwei Grenzflächen mit einer Reliefstruktur registergenau zueinander ausgebildet sind;
- Fig. 6: eine schematische Schnittdarstellung eines Sicherheitsverbundkörpers, bei dem ein Durchsichtfenster in einer opaken Schicht über Durchbrechungen ausgebildet ist;
- Fig. 7: eine weitere schematische Schnittdarstellung eines Sicherheitsverbundkörpers, bei dem ein Durchsichtfenster über eine Aussparung in einer vollflächigen Bedruckung ausgebildet ist; und
- Fig. 8: eine weitere schematische Schnittdarstellung eines Sicherheitsverbundkörpers, bei dem die Reliefstruktur in die transparente Schicht bei der Herstellung so eingebracht wurde, dass die Reliefstruktur vollständig unterhalb eines durch eine Oberseite festgelegtes Niveau ausgebildet ist.

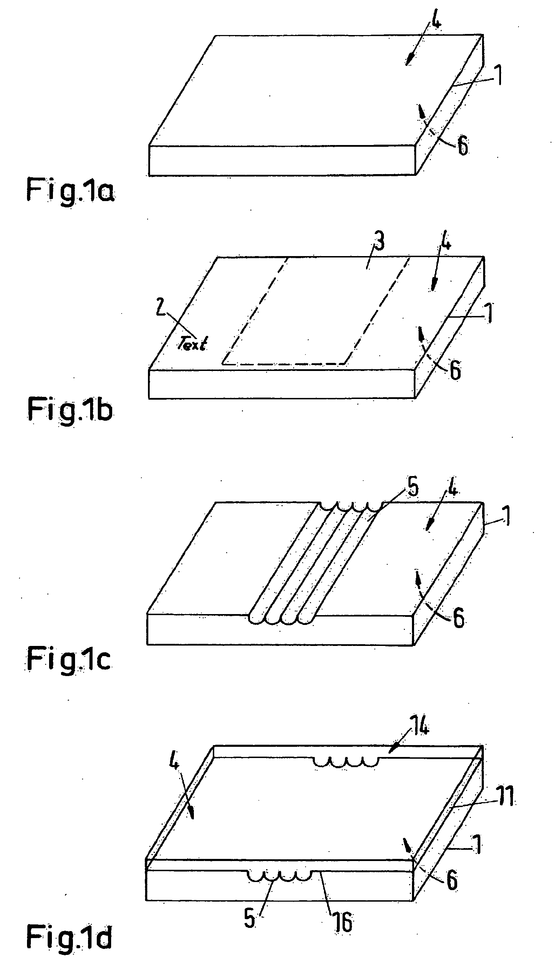

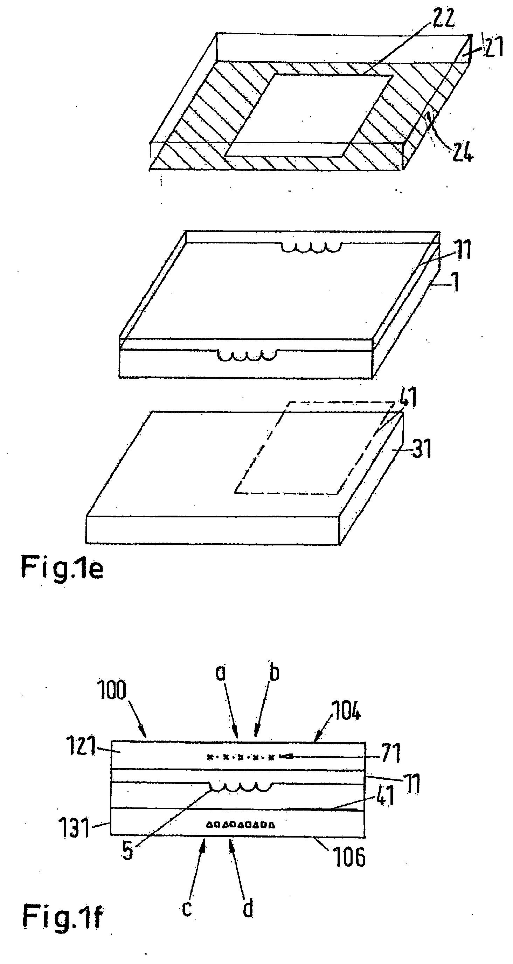

Anhand der Fig. 1a bis 1f soll das Herstellungsverfahren für einen Sicherheitsverbundkörper schematisch dargestellt werden. In Fig. 1 a ist das Bereitstellen einer im Volumen transparenten Schicht 1 aus einem ersten Kunststoffmaterial, beispielsweise einem Polycarbonat, dargestellt. Die Schicht 1, die als Substratschicht 1 bezeichnet wird, kann jedoch auch aus anderen Kunststoffmaterialien, insbesondere transparenten thermoplastischen Kunststoffmaterialien, hergestellt sein. Es können ebenfalls Kunststoffschichten verwendet werden, welche nur ein Gebiet umfassen, welches im Volumen transparent ist. Eine solche Schicht kann beispielsweise als coextrudierte Folie aus einem transparenten und einem oder mehreren opaken Kunststoffmaterialen hergestellt sein. Die transparente Schicht 1 weist eine Oberseite und eine gegenüberliegende Unterseite 6 auf. Diese sind vorzugsweise eben und planparallel. Die Oberfläche der Oberseite 4 und der Unterseite 6 können aufgeraut sein.

Die transparente Schicht 1 kann bearbeitet werden, beispielsweise kann eine Information 2 aufgedruckt werden. Dieses ist in Fig. 1b gezeigt. Wesentlich ist, dass ein Gebiet 3 transparent verbleibt.

In diesem Gebiet 3 wird anschließend eine Reliefstruktur 5 ausgebildet. Dies kann über unterschiedliche Verfahren erfolgen, vorzugsweise über ein Ultraschallprägeverfahren mit einer strukturieren Sonotrode, in die Ultraschall eingekoppelt wird und die während der Ultraschalleinkopplung mit Druck auf die Oberfläche 4 der Substratschicht 1 gepresst wird, sodass sich eine Reliefstruktur 5 in dem transparenten Gebiet 3 ausbildet. In der Oberseite 4 ist somit eine Reliefstruktur 5 ausgebildet. Eine Unterseite 6 der Substratschicht 1 ist vorzugsweise eben. In Fig. 1c ist die mit der Reliefstruktur 5 versehene Substratschicht 1 gezeigt.

Die Reliefstruktur 5 wird anschließend mit einem zweiten Kunststoffmaterial 11 verfüllt, sodass dieses eine an die Reliefstruktur 5 angepasste Gegenstruktur 15 ausbildet. Dieser Zustand ist in Fig. 1d gezeigt. Eine von der Reliefstruktur 5 abgewandte Oberfläche 14 des zweiten Kunststoffmaterials 11 ist eben und vorzugsweise planparallel zu der Unterseite 6 der Substratschicht 1. Das erste Kunststoffmaterial, aus dem die Substratschicht 1 gefertigt ist, weist einen anderen Brechungsindex n₁ auf als das zweite Kunststoffmaterial 11. Dessen Brechungsindex wird mit n₂ bezeichnet. Somit tritt eine Brechung gemäß der geometrischen Optik an der Reliefstruktur 5 bei einem Durchtritt von Licht auf. Die Form einer dieselbe Reliefstruktur 5 aufweisenden Grenzschicht 16 zwischen dem ersten Kunststoffmaterial der Substratschicht 1 und dem zweiten Kunststoffmaterial 11 legt somit gemeinsam mit den Brechungsindizes n₁ und n₂ die optische Brechung fest. In der dargestellten Ausführungsform ist die Reliefstruktur ausgebildet, um Zylinderlinsen auszubilden.

Das zweite Kunststoffmaterial 11 wird vorzugsweise in flüssiger Form auf die Oberfläche der ersten Substratschicht 1 appliziert, beispielsweise mittels eines Druckverfahrens oder mittels Rakeln. Bei der dargestellten Ausführungsform wird das zweite Kunststoffmaterial 11 vollflächig auf die Oberseite 4 der ersten Substratschicht 1 aufgebracht.

Wie in Fig. 1e dargestellt ist, werden eine zusätzliche Substratschicht 21 und eine weitere Substratschicht 31 bereitgestellt. Die zusätzliche Substratschicht 21 ist hierbei an einer Unterseite 24 vollflächig bis auf einen Aussparungsbereich 22 bedruckt. Dieser ist so positioniert, dass er bei einem Zusammenfügen der Schicht 21 mit der Substratschicht 1, auf welcher das zweite Kunststoffmaterial 11 aufgebracht ist, eine Durchsicht durch die Substratschicht 21 auf die ausgebildete brechende Struktur, welche durch die Reliefstruktur 5 geschaffen ist, ermöglicht. Die weitere Substratschicht 31 ist in diesem Beispiel als vollständig transparente Schicht ausgeführt. Zusätzlich ist ein Hologramm 41 bereitgestellt. Die Schlichten 21, 1 und 31 sowie das Hologramm 41 werden in der dargestellten Weise übereinander geschichtet und anschließend in einem Hochdruckhochtemperaturlaminationsverfahren zu einem Verbundkörper 100 verbunden, wie dies in Fig. 1f dargestellt ist. Vorzugsweise sind die Substratschichten 21 und 31 auf Basis desselben Polymers hergestellt wie die Schicht 1 und das zweite Kunststoffmaterial 11. Hierdurch kann erreicht werden, dass sich ein monolithischer Sicherheitsverbundkörper 100 bildet, bei dem an den ursprünglichen Grenzschichten zwischen den Schichten 21, 11, 1, 31 keine Phasenübergänge hinsichtlich der Polymerstruktur im Sicherheitsverbundkörper 100 erkennen lassen.

Die Brechungsindizes der zusätzlichen Schicht 21 und der weiteren Schicht 31 können im Prinzip beliebig gewählt werden. Vorzugsweise sind diese jedoch beispielsweise so gewählt, dass der Brechungsindex identisch zu dem des ersten Kunststoffmaterials ist. Bei einer solchen Ausführungsform weicht nur der Brechungsindex des zweiten Kunststoffmaterials ab. Dieser kann beispielsweise größer gewählt werden als der des ersten Kunststoffmaterials. Es sind jedoch auch Ausführungsformen denkbar, bei denen der Brechungsindex des zweiten Kunststoffmaterials geringer als der des ersten Kunststoffmaterials ist. Der Brechungsindex eines Kunststoffmaterials kann darüber angepasst werden, dass in der Polymermatrix Nanopartikel dispergiert werden, insbesondere Nanopartikel von Übergangsmetallverbindungen, welche selbst transparent sind. Hierzu eignen sich besonders Titandioxid TiO₂ oder Zirkondioxid ZrO₂.

In Fig. 1f ist angedeutet, dass über Laserstrahlung aus unterschiedlichen Richtungen a und b über die Oberseite 104 des Sicherheitsverbundkörpers 100 unterschiedliche Informationsanteile eines Merkmals 61, die hier über ein Quadrat und ein Dreieck angedeutet sind, in dem Sicherheitsverbundkörper 100 mittels Lasermarkierung gespeichert werden können. Das Laserlicht wird über die durch die Strukturierung 5 ausgebildeten Mikrolinsen unterhalb der Strukturierung an unterschiedlichen Orten fokussiert und bewirkt eine Einfärbung des Kunststoffmaterials einer Materialschicht 131, di mit der ursprünglichen Schicht 31 korrespondiert. So werden die Informationsanteile an unterschiedlichen Orten gespeichert. Bei einer Einstrahlung von Laserlicht über eine Unterseite 106 des Sicherheitsverbundkörpers 100 werden aus unterschiedlichen Einstrahlrichtungen unterschiedliche Informationsanteile c und d, hier ein Punkt und ein Kreuz, des anderen Merkmals 71 in den Sicherheitsverbundkörper 100 eingespeichert, wobei die Speicherung in der Materialschicht 121 entsteht, welche aus der Schicht 21 gebildet ist. Analog zu der beschriebenen Einspeicherung sind betrachtungswinkelabhängig unter den Betrachtungsrichtungen ab, cd, unter denen die unterschiedlichen Informationen eingeschrieben worden sind, diese Informationen verifizierbar. Die Informationsanteile Punkt, Kreuz sind somit betrachtungswinkelabhängig bei einer Betrachtung durch die Unterseite 106 wahrnehmbar und die Informationsanteile Dreieck, Quadrat betrachtungswinkelabhängig bei einer Betrachtung durch die Oberseite 104 des Sicherheitsverbundkörpers 100. Die Informationsanteile Punkt, Kreuz und Dreieck, Quadrat stellen somit jeweils Informationsanteile von zwei Merkmalen dar, welche auf unterschiedlichen Seiten der Strukturierung 5 in dem Sicherheitsverbundkörper 100 ausgebildet sind. Diese Merkmale 61, 71 bilden gemeinsam mit der Strukturierung und der Tatsache, dass das erste Kunststoffmaterial und das zweite Kunststoffmaterial auf beiden Seiten der Grenzschicht, welche die Reliefstruktur 5 bildet, einen unterschiedlichen Brechungsindex aufweisen, ein neuartiges kombinatorisches Sicherheitsmerkmal. Zusätzlich zu der betrachtungswinkelabhängigen Information, welche bezogen auf die Betrachtungsseite des Sicherheitsverbundkörpers unterhalb der Reliefstruktur 5 angeordnet ist, ist die jeweils oberhalb angeordnete Information des jeweils anderen Merkmals als statische Information betrachtungswinkelunabhängig erkennbar.

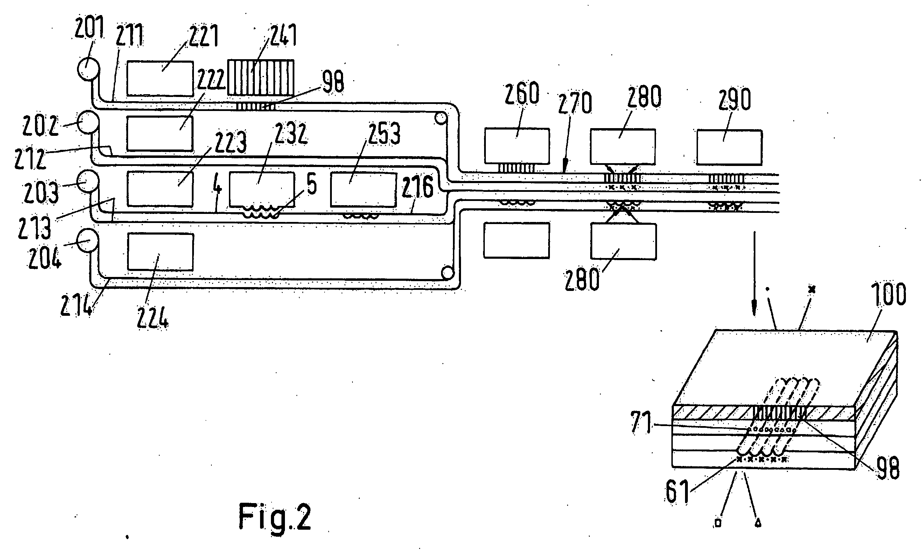

In Fig. 2 ist das Herstellungsverfahren erneut schematisch im Zusammenhang mit einer Herstellvorrichtung 200 dargestellt. Über unterschiedliche Rollen 201-204 werden unterschiedliche Substratschichten 211, 212, 213, 214 bereitgestellt. Während die Substratschicht 211 im dargestellten Ausführungsbeispiel eine opake Schicht ist, sind die Substratschichten 212, 213, 214 jeweils transparente Substratschichten. Die als Folien bereitgestellten Substratschichten 212 und 214 sind darüber hinaus als so genannte laserfähige Folien ausgebildet, welche für eine Lasermarkierung ausgebildet sind. Über Druckeinrichtungen 221-224 können die einzelnen Substratschichten 211-214 an ihren Ober- und/oder Unterseiten bedruckt werden.

In einer Prägeeinrichtung 233 wird in eine Oberseite 4 der Substratschicht 213 eine Reliefstruktur 5 eingeprägt. In die opake Substratschicht 11 wird mittels einer Perforationseinheit 241 ein Durchsichtfenster in Form von mikroskopischen Durchbrechungen, welche als Durchgangslöcher ausgebildet sind, in der Substratschicht 211 geschaffen. In einer Verfülleinrichtung 253 wird ein zweites Kunststoffmaterial 216 auf die Oberseite 4 der Substratschicht 213 aufgebracht, sodass die Reliefstruktur 5 vollständig eingeebnet und überdeckt wird. Dies bedeutet, dass die Reliefstruktur vollständig von dem zweiten Kunststoffmaterial 216 überdeckt wird. Anschließend werden die Substratschichten 211, 212, 213 mit der darauf ausgebildeten Schicht 216 sowie die Substratschicht 214 zusammengeführt und in einer Hochdruckhochtemperaturlaminationseinrichtung 260 zu einem Verbund 270 laminiert. In einer Beschriftungseinrichtung 280 werden Merkmale registergenau oberhalb und unterhalb der Reliefstruktur 5 eingespeichert. Diese umfassen unterschiedliche Informationsanteile, die aus unterschiedlichen Lasereinstrahlrichtungen unter Ausnutzung der Reliefstruktur 5 im Innern des Verbunds 270 registergenau mit dieser markiert werden.

In einer Vereinzelungseinrichtung 290 werden schließlich einzelne Sicherheitsverbundkörper 100 aus dem Verbund 270 vereinzelt. Es versteht sich, dass lediglich eine beispielhafte Ausführungsform beschrieben ist und weitere Sicherheitsmerkmale und Sicherheitselemente in dem Produktionsprozess mit ausgebildet und eingefügt werden können. Eine Anzahl der verwendeten Schichten bzw. Folien kann ebenfalls selbstverständlich variiert werden.

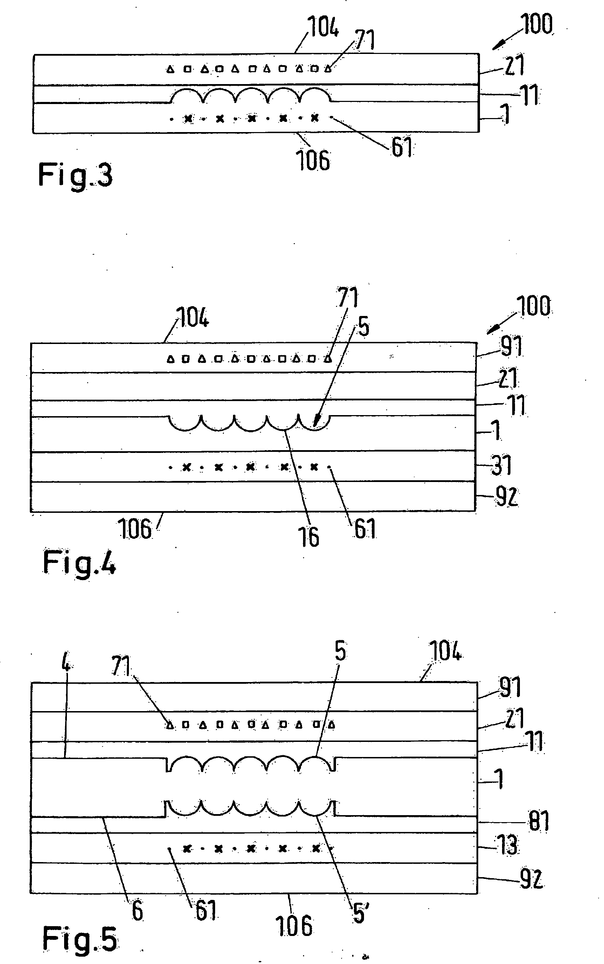

In Fig. 3 ist eine sehr einfache Ausführungsform eines Sicherheitsverbundkörpers 100 gezeigt, bei der auf die Substratschicht 1 mit der Reliefstruktur 5 das zweite Kunststoffmaterial 11 aufgebracht ist und dieses lediglich durch eine zusätzliche Substratschicht 21 überlagert ist. Bei dieser Ausführungsform sind die Sicherheitsmerkmale 61, 71 in der Schicht 1 und der zusätzlichen Schicht 21 mittels Lasermarkierung ausgebildet.

Fig. 4 zeigt eine weitere Ausführungsform eines Sicherheitsverbundkörpers 100, welcher aus insgesamt fünf Folienschichten sowie einer auf die Substratschicht 1 aufgebrachten Schicht aus dem zweiten Kunststoffmaterial hergestellt ist. Es wird an dieser Stelle angemerkt, dass die in den Fig. 1d, 1f, 2 bis 8 eingezeichneten Schichtgrenzen in dem jeweiligen Sicherheitsverbundkörper 100 lediglich zur Veranschaulichung und als Hinweis auf die zur Herstellung verwendeten Schichten eingezeichnet sind. Sind diese alle auf Basis desselben Polymers hergestellt, so sind solche Schichtgrenzen im Verbundkörper nicht anhand der Kunststoffstruktur, sondern höchstens anhand anderer Eigenschaften, wie dem Brechungsindex, eine Transparenz, aufgebrachte Druckinformationen, oder Beimengungen von Substanzen, beispielsweise Photosensibilisatoren oder Ähnlichem, identifizierbar.

In Fig. 5 ist eine Ausführungsform dargestellt, bei der in der Substratschicht 1 sowohl an der Oberseite 4 als auch an der Unterseite 6 Reliefstrukturen 5 und 5' ausgebildet sind. Die Oberseite 4 ist mit einem zweiten Kunststoffmaterial 11 überdeckt und die Unterseite 6 mit einem dritten Kunststoffmaterial 81. Weist das erste Kunststoffmaterial der Substratschicht 1 einen Brechungsindex n₁ auf, so sind bei einer Ausführungsform die Brechungsindizes des zweiten Kunststoffmaterials n₂ und des dritten Kunststoffmaterials n₃ so gewählt, dass diese beide kleiner als der Brechungsindex n₁ sind. Bei einer anderen Ausführungsform kann dieses Verhältnis umgekehrt werden, sodass die Brechungsindizes n₂, n₃ größer als der Brechungsindex n₁ des ersten Kunststoffmaterials ist. Diese Ausgestaltungen bieten den Vorteil, dass die beiden Reliefstrukturen 5, 5', welche registergenau zueinander ausgebildet sind, eine stärker beugende Wirkung der Gesamtstruktur bewirken können. Es sind somit beispielsweise kürzere Brennweiten realisierbar. Angrenzend an das zweite Kunststoffmaterial 11 und das dritte Kunststoffmaterial 81 sind Substratschichten 21 und 31 ausgebildet, welche jeweils laserfähig sind. An einer Oberseite 4 des Sicherheitsverbundkörpers 100 ist darüber eine weitere Substratschicht 91 ausgebildet und an der Unterseite 6 eine weitere Substratschicht 92. In dem Sicherheitsverbundkörper 100 können selbstverständlich weitere Sicherheitsmerkmale ausgebildet sein, die aus Gründen der Vereinfachung nicht dargestellt sind. Wesentlich ist lediglich, dass durch sämtliche Substratschichten 1, 21, 31, 91, 92 sowie die Kunststoffmaterialien 11 und 81 im Bereich, in dem die Reliefstrukturen 5, 5' ausgebildet sind, eine Durchsicht durch den Sicherheitsverbundkörper 100 möglich ist.

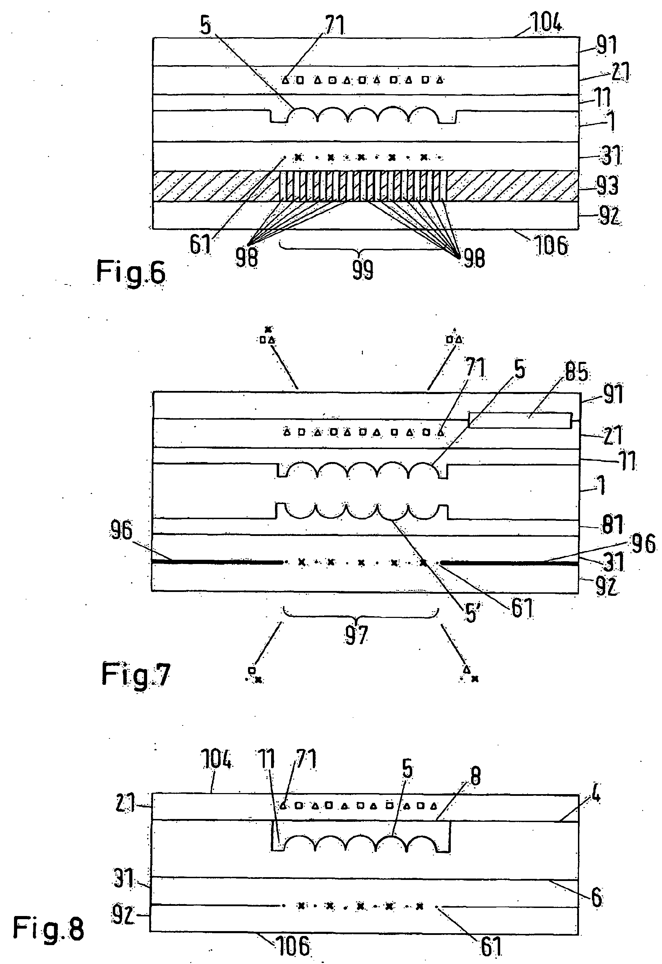

In Fig. 6 ist ein Schnitt durch eine weitere Ausführungsform eines Sicherheitsverbundkörpers 100 dargestellt. Die Substratschicht 1 ist nur an ihrer Oberseite 4 mit einer Reliefstruktur 5 ausgebildet, über die ein zweites Kunststoffmaterial 11 überlagert ist. Darüber sind eine laserfähige Substratschicht 21 und eine obere Deckschicht 91 angeordnet. Unter der Unterseite 6 der Substratschicht 1 ist eine laserfähige Substratschicht 31, eine opake Substratschicht 93 sowie eine untere Schutzschicht 92 angeordnet. In der opaken Substratschicht 93 ist eine Vielzahl von Durchbrechungen 98 ausgebildet, sodass in der opaken Substratschicht 93 in dem Bereich 99, in dem die Reliefstruktur 5 ausgebildet ist, eine Durchsicht durch den Sicherheitsverbundkörper 100 möglich ist. Die Sicherheitsmerkmale 61, 71, welche auf gegenüberliegenden Seiten der Reliefstruktur 5 angeordnet sind, sind in den Substratschichten 21 und 31 mittels Lasermarkierung ausgebildet.

In Fig. 7 ist eine weitere Ausführungsform gezeigt, welche ähnlich zu der nach Fig. 5 ist. Diese Ausführungsform unterscheidet sich von der nach Fig. 5 dadurch, dass eines der Sicherheitsrrierkmale drucktechnisch auf eine Unterseite der Substratschicht 31 aufgebracht ist, welche in diesem Fall nicht laserfähig sein muss. Zusätzlich ist die Oberseite der untersten Substratschicht 92 vollflächig bis auf eine Aussparung 97 mit optischer Tinte 96 bedruckt, welche eine Durchsicht auf die Reliefstrukturen 5 und 5' bzw. Sicherheitsmerkmale 61, 71 ermöglichen. Dieser Sicherheitsverbundkörper 100 weist somit ein drucktechnisch hergestelltes Durchsichtfenster auf. Zusätzlich ist bei diesem Sicherheitsverbundkörper ein weiteres Sicherheitselement 85, beispielsweise ein Mikrochip exemplarisch eingefügt.

In Fig. 8 ist schematisch eine Schnittansicht durch eine weitere Ausführungsform eines Sicherheitsverbundkörpers 100 dargestellt. Bei der dargestellten Ausführungsform ist die Reliefstruktur 5 in der Oberseite 4 der Substratschicht 1 so ausgebildet, dass die Reliefstruktur vollständig unterhalb eines Niveaus 8 ausgebildet ist, welches durch die Oberseite 4 der Substratschicht festgelegt ist. Eine solche Ausführungsform kann beispielsweise mittels eines Laserablationsverfahrens zur Strukturierung des Reliefs realisiert werden. Andere mögliche Ausführungsformen sehen vor, dass in dem Bereich, in welchem die Reliefstruktur ausgebildet werden soll, zunächst Material von der Oberfläche entfernt wird. Hierzu können beispielsweise spanabhebende Verfahren genutzt werden. Anschließend kann über eine Sonotrodenprägung die Reliefstruktur 5 ausgebildet werden. Bei dieser Ausführungsform ist eine Applikation des zweiten Kunststoffmaterials in der Weise möglich, dass nur die Reliefstruktur lokal überdeckt wird und das zweite Kunststoffmaterial bündig mit der Oberfläche 4 der Substratschicht 1 abschließt. In der dargestellten Ausführungsform ist oberhalb eine weitere Substratschicht 21, welche laserfähig ist, angeordnet. Unterhalb der Substratschicht 1 sind eine Substratschicht 31 und eine weitere Substratschicht 92 angeordnet, auf deren Oberfläche das eine Sicherheitsmerkmal 71 drucktechnisch ausgebildet ist. Dieses muss selbstverständlich registergenau beim Zusammenfügen der Substratschichten zu der Reliefstruktur ausgerichtet werden. Das andere Sicherheitsmerkmal 61 ist mittels Laserbeschriftung durch die Unterseite 106 des Sicherheitsverbundkörpers 100 in diesen eingebracht. Würde die Schicht 1 hinsichtlich der Materialstärke angepasst, könnte auch die Schicht 31 eingespart werden und das Merkmal 61 auf die Unterseite 4 registergenau zu der Reliefstruktur aufgedruckt sein. Das Bedrucken kann vor dem Ausbilden der Reliefstruktur erfolgen. Diese kann dann registergenau an die Bedruckung angepasst eingeprägt werden.

Es versteht sich für den Fachmann, dass lediglich beispielhafte Ausführungsformen beschrieben sind. Die einzelnen in den unterschiedlichen Ausführungsformen beschriebenen Merkmale können beliebig miteinander kombiniert werden, insofern sie zu einer Ausführungsform im Bereich der Ansprüche führen. So kann das Durchsichtfenster drucktechnisch mittels Perforation oder sogar über ein Einbringen einer großen Aussparung, welche beispielsweise über ein Einsetzen eines anderen Kunststoffmaterials gefüllt wird, in eine der weiteren Schichten ausgebildet werden. Zusätzlich sind Ausführungsformen denkbar, bei denen sowohl die erste als auch die zweite Information drucktechnisch im Sicherheitsverbundkörper eingespeichert werden. Alle Kombinationen von Lasermarkierung und Druckmarkierung können in Kombination verwendet werden. Über eine unterschiedliche Ausbildung der einzelnen Reliefstrukturen ist es sogar möglich, dass ein Teil des einen Sicherheitsmerkmals drucktechnisch und ein Teil des Sicherheitsmerkmals mittels Lasermarkierung auf einer Seite der Reliefstruktur und das Sicherheitsmerkmal auf der anderen Seite der Reliefstruktur beliebig mittels Lasermarkierung und/oder Drucken eingebracht wird. Darüber hinaus sind andere Formen des Einbringens von optisch erfassbaren Merkmalen möglich.

## Patentansprüche

1. Verfahren zur Herstellung eines Sicherheitsverbundkörpers (100) umfassend die Schritte:
Bereitstellen einer transparenten Schicht (1) aus einem ersten Kunststoffmaterial mit einem ersten Brechungsindex n₁, wobei die transparente Schicht (1) eine Oberseite (4) und einer gegenüberliegende Unterseite (6) aufweist;
Ausbilden einer Reliefstruktur (5) in die Oberseite (4) der transparenten Schicht (1); Überdecken zumindest der Reliefstruktur (5) mit einem zweiten Kunststoffmaterial (11), welches einen von dem ersten Brechungsindex abweichenden zweiten Brechungsindex n₂ aufweist;
Zusammenfügen des mindestens einen zweiten Kunststoffmaterials (11) und gegebenenfalls weiterer zumindest teilweise transparenter Schichten (21, 31, 91, 92) mit der einen transparenten Schicht zu dem Sicherheitsverbundkörper (100), so dass eine Unterseite (6) der transparenten Schicht (1) einer Unterseite (106) des Verbundkörpers (100) zugewandt ist und eine Oberseite der transparenten Schicht der Oberseite des Verbundkörpers zugewandt ist; und
Einbringen von zwei Merkmalen (61, 71) in den Sicherheitsverbundkörper (100), wobei die zwei Merkmale (61, 71) registergenau mit der Reliefstruktur (5) auf entgegengesetzten Seiten der Reliefstruktur (5) in dem Sicherheitsverbundkörper (100) eingebracht werden, so dass bei einer Betrachtung des Sicherheitsverbundköpers (100) über die Oberseite (104) ein betrachtungswinkelabhängiger Effekt des einen Merkmals (61) und bei einer Betrachtung des Sicherheitsverbundkörpers (100) über dessen Unterseite (106) ein betrachtungswinkelabhängiger Effekt des anderen Merkmals (71) wahrnehmbar ist.

2. Verfahren nach Anspruch 1, **dadurch gekennzeichnet, dass** das Ausbilden der Reliefstruktur (5) mittels eines Ultraschallprägeverfahrens erfolgt, bei dem in eine strukturierte Sonotrode Ultraschall eingekoppelt wird und diese unter Aufwenden eines Drucks mit der Oberseite (4) der transparenten Schicht (1) in Kontakt gebracht wird.

3. Verfahren nach einem der vorangehenden Ansprüche, **dadurch gekennzeichnet, dass** mindestens eines der Merkmale (61, 71) mittels eines Lasermarkierungsverfahrens nach dem Zusammenfügen unter Ausnutzung der der im Innern des Sicherheitsverbundkörpers (100) mittels der Reliefstruktur (5) ausgebildeten Linsenstrukturen eingebracht wird.

4. Verfahren nach einem der vorangehenden Ansprüche, **dadurch gekennzeichnet, dass** die Reliefstruktur strukturiert ist, ein Linsenarray auszubilden.

5. Verfahren nach einem der vorangehenden Ansprüche, **dadurch gekennzeichnet, dass** mindestens eines der Merkmale (61, 71) über ein Aufdrucken von Informationen auf eine Oberfläche einer der zu dem Sicherheitsverbundkörper (100) zusammengefügten Schichten (21, 31) eingebracht wird.

6. Verfahren nach einem der vorangehenden Ansprüche, **dadurch gekennzeichnet, dass** das zweite Kunststoffmaterial (11) mittels eines Druckverfahrens aufgebracht wird, so dass zumindest in dem Gebiet, in dem das Reliefstruktur ausgebildet ist, eine ebene Fläche mittels des zweiten Kunststoffmaterials (11) ausgebildet wird.

7. Verfahren nach einem der vorangehenden Ansprüche, **dadurch gekennzeichnet, dass** das zweite Kunststoffmaterial mittels Rakeln aufgebracht wird.

8. Verfahren nach einem der vorangehenden Ansprüche, **dadurch gekennzeichnet, dass** die zu dem Verbundkörper zusammengefügten Schichten (21, 1, 31, 91, 92) und das zweite Kunststoffmaterial (11) alle auf Basis desselben thermoplastischen Polymermaterials hergestellt sind oder werden.

9. Sicherheitsverbundkörper (100), umfassend
eine erste transparente Materialschicht aus einem ersten Kunststoffmaterial mit einem ersten Brechungsindex n₁ , welche eine im Innern des Verbundkörpers befindliche Oberseite aufweist, in der eine Reliefstruktur (5) ausgebildet ist, und an die Reliefstruktur (5) angepasste, an die Reliefstruktur (5) unmittelbar angrenzende Gegenstruktur, aus einem zweiten Kunststoffmaterial (11), welches einen von dem ersten Brechungsindex n₁ abweichenden zweiten Brechungsindex n₂ aufweist, und zwei Merkmale (61, 71), wobei die zwei Merkmale (61, 71) registergenau mit der Reliefstruktur (5) auf entgegengesetzten Seiten der Reliefstruktur (5) ausgebildet sind, so dass bei einer Betrachtung des Sicherheitsverbundköpers (100) über die Oberseite (104) eine betrachtungswinkelabhängiger Effekt des einen Merkmals (61) und bei einer Betrachtung des Verbundkörpers über dessen Unterseiteseite (106) ein betrachtungswinkelabhängiger Effekt des anderen Merkmals (71) wahrnehmbar ist.

10. Sicherheitsverbundkörper (100) nach Anspruch 9, **dadurch gekennzeichnet, dass** das zweite Kunststoffmaterial (11) an der von der Reliefstruktur (5) abgewandten Seite zumindest im Bereich der Reliefstruktur (5) eine ebene Fläche ausbildet.

11. Verfahren nach einem der Patentansprüche 1 bis 8, **dadurch gekennzeichnet, dass** das zweite Kunststoffmaterial (11) auf Basis desselben Polymers wie das erste Kunststoffmaterialhergestellt wird oder ist und in flüssiger Form auf die mit der Reliefstruktur (5) versehene eine transparente Schicht aufgebracht wird, wobei ein Brechungsindex unterschied Δn = |n₁-n₂| zwischen dem Brechungsindex n₁ des ersten Kunststoffmaterial, aus dem die eine transparente Schicht hergestellt ist, und dem Brechungsindex n₂ des zweiten Kunststoffmaterials im fertigen Sicherheitsverbundkörper (100) über unterschiedliche Konzentrationen von nanoskopischen dispergierten Anorganika, insbesondere Übergangsmetallverbindungen, noch bevorzugter Übergangsmetalloxiden, wie TiO₂ oder ZrO₂, verursacht ist.

12. Sicherheitsverbundkörper nach einem der Ansprüche 9 oder 10, **dadurch gekennzeichnet, dass** der Sicherheitsverbundkörper zumindest im Bereich der Reliefstruktur ein Durchsichtfenster aufweist.

13. Sicherheitsverbundkörper nach einem der Ansprüche 9, 10 oder 12, **dadurch gekennzeichnet, dass** zusätzlich in die Unterseite der einen transparenten Schicht registergenau mit der Reliefstruktur eine weitere Reliefstruktur ausgebildet wird, die ebenfalls mit dem zweiten Kunststoffmaterial oder einem dritten Kunststoffmaterial, welches einen von dem ersten Kunststoffmaterial abweichenden Brechungsindex n₃ aufweist, überdeckt ist, so dass in dem Verbundkörper durch das zweite Kunststoffmaterial oder das dritte Kunststoffmaterial eine an die weitere Reliefstruktur angepasste weitere Gegenstruktur ausgebildet ist.

## Claims

1. A method for producing a security composite body (100) comprising the steps of:
providing a transparent layer (1) made of a first plastic material having a refractive index n₁, with the transparent layer (1) exhibiting an upper side (4) and an opposite underside (6);
forming a relief structure (5) in the upper side (4) of the transparent layer (1);
covering at least the relief structure (5) with a second plastic material (11) which exhibits a second refractive index n₂ that is different from the first refractive index;
Joining together the at least one second plastic material (11) and optionally further at least partially transparent layers (21, 31, 91, 92) with the one transparent layer to form the security composite body (100), so that an underside (6) of the transparent layer (1) faces an underside (106) of the composite body (100) and an upper side of the transparent layer faces the upper side of the composite body; and
introducing of two features (61, 71) into the security composite body (100), with the two features (61, 71) being introduced in the security composite body (100) in exact register with the relief structure (5) on opposite sides of the relief structure (5), so that a viewing angle-dependent effect of the one feature (61) can be perceived when the security composite body (100) is viewed from its upper side (104) and a viewing angle-dependent effect of the other feature (71) can be perceived when the security composite body (100) is viewed from its underside (106).

2. The method of claim 1 wherein the configuring of the relief structure (5) is effected by way of an ultrasonic embossing method in which ultrasound is injected into a structured sonotrode which is brought into contact with the upper side (4) of the transparent layer (1) through the application of pressure.

3. The method of any one of the preceding claims wherein at least one of the features (61, 71) is introduced by way of a laser marking method after assembly with the use of the lens structures that are configured in the interior of the security composite body (100) by way of the relief structure (5).

4. The method of any one of the preceding claims wherein the relief structure is structured to configure a lens array.

5. The method of any one of the preceding claims wherein at least one of the features (61, 71) is introduced by a printing of information onto a surface of one of the layers (21, 31) which are joined to form the security composite body (100).

6. The method of any one of the preceding claims wherein the second plastic material (11) is applied by way of a printing method so that the second plastic material (11) forms a flat surface at least in that region in which the relief structure is configured.

7. The method of any one of the preceding claims wherein the second plastic material is applied by way of doctoring.

8. The method of any one of the preceding claims wherein the layers (21, 1, 31, 91, 92) joined to form the composite body and the second plastic material (11) are all produced on the basis of the same thermoplastic polymer material.

9. A security composite body (100), comprising
a first transparent material layer made from a first plastic material having a first refractive index n₁, which exhibits an upper side located in the interior of the composite body, in which upper side a relief structure (5) is configured, and a complementary structure that is adapted to the relief structure (5) and that lies directly against the relief structure (5), made from a second plastic material (11) which exhibits a second refractive index n₂ different from the first refractive index n₁, and two features (61, 71), with the two features (61, 71) being configured in exact register with the relief structure (5) on opposite sides of the relief structure (5), so that a viewing angle-dependent effect of the one feature (61) can be perceived when the security composite body (100) is viewed from its upper side (104) and a viewing angle-dependent effect of the other feature (71) can be perceived when the security composite body (100) is viewed from its underside (106).

10. The security composite body (100) of claim 9 wherein on the side facing away from the relief structure (5) the second plastic material (11) forms a flat surface at least in the region of the relief structure (5).

11. The method of any one of claims 1 to 8 wherein the second plastic material (11) is produced on the basis of the same polymer as the first plastic material and is applied in liquid form to the one transparent layer that is provided with the relief structure (5), with a refractive index difference Δn = |n₁-n₂| between the refractive index n₁ of the first plastic material from which the one transparent layer is produced and the refractive index n₂ of the second plastic material being brought about in the finished security composite body (100) by different concentrations of nanoscopic dispersed minerals, in particular transition metal compounds, even more preferably transition metal oxides, such as TiO₂ or ZrO₂.

12. The security composite body of any one of claims 9 or 10 wherein the security composite body exhibits a through-view window at least in the region of the relief structure.

13. The security composite body of any one of claims 9, 10 or 12 wherein there is additionally configured in the underside of the one transparent layer and in exact register with the relief structure, a further relief structure which is also covered with the second plastic material or a third plastic material which exhibits a refractive index n₃ that is different from that of the first plastic material, such that a further complementary structure which is adapted to the further relief structure is configured in the composite body through the second plastic material or the third plastic material.

## Revendications

1. Procédé de fabrication d'un corps composite de sécurité (100) comprenant les étapes suivantes :
la mise à disposition d'une couche transparente (1) en un premier matériau plastique avec un premier indice de réfraction n₁, la couche transparente (1) présentant un côté supérieur (4) et un côté inférieur (6) en regard ;
la réalisation d'une structure en relief (5) dans le côté supérieur (4) de la couche transparente (1) ;
le recouvrement au moins de la structure en relief (5) avec un second matériau plastique (11) qui présente un second indice de réfraction n₂ différent du premier indice de réfraction ;
l'assemblage de l'au moins un second matériau plastique (11) et éventuellement d'autres couches au moins partiellement transparentes (21, 31, 91, 92) avec l'une couche transparente en corps composite de sécurité (100) de sorte qu'un côté inférieur (6) de la couche transparente (1) soit tourné vers un côté inférieur (106) du corps composite (100) et un côté supérieur de la couche transparente soit tourné vers le côté supérieur du corps composite ; et
l'introduction de deux éléments caractéristiques (61, 71) dans le corps composite de sécurité (100), les deux éléments caractéristiques (61, 71) étant introduits en registre précis avec la structure en relief (5) sur des côtés en regard de la structure en relief (5) dans le corps composite de sécurité (100) de sorte que lors d'une observation du corps composite de sécurité (100) par le côté supérieur (104), un effet dépendant de l'angle d'observation d'un élément caractéristique (61) et lors d'une observation du corps composite de sécurité (100) par son côté inférieur (106), un effet dépendant de l'angle d'observation de l'autre élément caractéristique (71) soient perceptibles.

2. Procédé selon la revendication 1, **caractérisé en ce que** la réalisation de la structure en relief (5) est effectuée à l'aide d'un procédé d'estampage à ultrasons, pour lequel un ultrason est introduit dans une sonotrode structurée, et celle-ci est amenée en contact par application d'une pression avec le côté supérieur (4) de la couche transparente (1).

3. Procédé selon l'une quelconque des revendications précédentes, **caractérisé en ce qu'**au moins l'un des éléments caractéristiques (61, 71) est introduit à l'aide d'un procédé de marquage au laser après l'assemblage en utilisant des structures lenticulaires réalisées à l'intérieur du corps composite de sécurité (100) à l'aide de la structure en relief (5).

4. Procédé selon l'une quelconque des revendications précédentes, **caractérisé en ce que** la structure en relief est structurée afin de réaliser un agencement de lentilles.

5. Procédé selon l'une quelconque des revendications précédentes, **caractérisé en ce qu'**au moins l'un des éléments caractéristiques (61, 71) est introduit par une surimpression d'informations sur une surface d'une des couches (21, 31) assemblées en corps composite de sécurité (100).

6. Procédé selon l'une quelconque des revendications précédentes, **caractérisé en ce que** le second matériau plastique (11) est appliqué à l'aide d'un procédé d'impression de sorte qu'au moins dans la zone, dans laquelle la structure en relief est réalisée, une surface plane soit réalisée à l'aide du second matériau plastique (11).

7. Procédé selon l'une quelconque des revendications précédentes, **caractérisé en ce que** le second matériau plastique est appliqué par des racles.

8. Procédé selon l'une quelconque des revendications précédentes, **caractérisé en ce que** les couches (21, 1, 31, 91, 92) assemblées en corps composite et le second matériau plastique (11) sont tous fabriqués à base du même matériau polymère thermoplastique.

9. Corps composite de sécurité (100) comprenant
une première couche de matériau transparente en un premier matériau plastique avec un premier indice de réfraction n₁ qui présente un côté supérieur se trouvant à l'intérieur du corps composite, dans lequel une structure en relief (5) est réalisée, et une structure antagoniste adaptée à la structure en relief (5), contiguë directement à la structure en relief (5), en un second matériau plastique (11) qui présente un second indice de réfraction n₂ différent du premier indice de réfraction n₁ et deux éléments caractéristiques (61, 71), les deux éléments caractéristiques (61, 71) étant réalisés en registre précis avec la structure en relief (5) sur des côtés en regard de la structure en relief (5) de sorte que, lors d'une observation du corps composite de sécurité (100) par le côté supérieur (104), un effet dépendant de l'angle d'observation de l'un élément caractéristique (61) et, lors d'une observation du corps composite par son côté inférieur (106), un effet dépendant de l'angle d'observation de l'autre élément caractéristique (71) soient perceptibles.

10. Corps composite de sécurité (100) selon la revendication 9, **caractérisé en ce que** le second matériau plastique (11) réalise une surface plane sur le côté éloigné de la structure en relief (5) au moins dans la zone de la structure en relief (5).

11. Procédé selon l'une quelconque des revendications 1 à 8, **caractérisé en ce que** le second matériau plastique (11) est fabriqué sur la base du même polymère que le premier matériau plastique et est appliqué sous la forme liquide sur l'une couche transparente pourvue de la structure en relief (5), un indice de réfraction étant suscité différemment Δn = |n₁-n₂| entre l'indice de réfraction n₁ du premier matériau plastique, en lequel l'une couche transparente est fabriquée, et l'indice de réfraction n₂ du second matériau plastique dans le corps composite de sécurité (100) fini par des différentes concentrations de substances anorganiques dispersées nanoscopiques, en particulier des liaisons de métaux de transition, de manière encore préférée des oxydes de métal de transition tels que TiO₂ ou ZrO₂.

12. Corps composite de sécurité selon l'une quelconque des revendications 9 ou 10, **caractérisé en ce que** le corps composite de sécurité présente au moins dans la zone de la structure en relief une fenêtre transparente.

13. Corps composite de sécurité selon l'une quelconque des revendications 9, 10 ou 12, **caractérisé en ce que**, en outre, dans le côté inférieur d'une couche transparente, une autre structure en relief est réalisée en registre précis avec la structure en relief, laquelle autre structure recouvre aussi avec le deuxième matériau plastique ou un troisième matériau plastique qui présente un indice de réfraction n₃ différent du premier matériau plastique, de sorte qu'une autre structure antagoniste adaptée à l'autre structure en relief soit réalisée dans le corps composite par le deuxième matériau plastique ou le troisième matériau plastique.
